# EUROPEAN PATENT SPECIFICATION

(11) **EP 4 438 414 B1**
(45) Date of publication and mention of the grant of the patent: **11.11.2026**
(21) Application number: 24167670.9
(22) Date of filing: 28.03.2024
(51) Int. Cl.: B60R 9/06, B60R 9/10

(54) **BICYCLE CARRIER**
FAHRRADTRÄGER
SUPPORT DE BICYCLETTE

(30) Priority: 30.03.2023 BE 202305245
(43) Date of publication of application: 02.10.2024
(60) Divisional application: 25195691.8 / 4 624 260
(73) Proprietor: Prostor BV, 8500 Kortrijk (BE)
(72) Inventor: Brutsaert, Sofie, 8500 Kortrijk (BE)
(74) Representative: Oryon NV

(56) References cited:
- EP-B1- 1 245 448
- DE-A1- 4 424 226
- US-A- 4 275 981
- US-A- 5 190 195
- US-A1- 2002 154 980
- US-A1- 2008 290 627
- US-B2- 11 572 022
- US-B2- 8 047 412

## Description

The present invention relates to a bicycle carrier.

The invention more specifically relates to a bicycle carrier for mounting on a vehicle such as a mobile home, caravan, car or the like, but is not limited to this.

Where reference is made to a bicycle carrier in this document, this also relates, among others, to racks for other two-wheelers and alternatively also for other forms of luggage, trunks and the like.

Typically, bicycle carriers are mounted on the towbar or a fixed location at the back against the vehicle or sometimes also at the front on top of the drawbar in the case of towed vehicles such as caravans and trailers. For loading and unloading the bicycles on and off the bicycle carrier the bicycles must be lifted, which can be heavy, particularly when it relates to electric bicycles.

Furthermore, this implies that such bicycle carriers are mounted relatively low to the ground to make loading and unloading easier. However, this is not safe to drive and also increases the potential risk of theft.

Such bicycle carrier may also form an obstacle for accessing the luggage or engine compartment or block the view through a window or block the view of the licence plate and indicators, such that additional provisions are required for auxiliary lights and an extra licence plate that is then mounted on the bicycle carrier.

Furthermore, it is not always possible to mount such bicycle carrier in the most suitable location due to the presence of a bumper, a window, a door, a spare wheel or the like.

The traditional bicycle carriers for mounting to a vehicle comprise coupling means intended for attaching against the vehicle and a load-bearing structure. Said load-bearing structure is provided with one or several guides that extend in a parallel way to a wall of the vehicle. Said guides are intended to support the bicycle under the tyres of the bicycle.

When the bicycle carrier is not loaded, typically the load-bearing structure is folded up towards the vehicle.

EP 1 245 448 B1 discloses a prior art bicycle carrier, comprising a bicycle support which can hinge around the hinge shaft between a load position and a transport position.

The purpose of the present invention is to provide a solution to the aforementioned and other disadvantages.

To this end, the invention relates to a bicycle carrier, comprising
coupling means for mounting to a vehicle, whereby the bicycle carrier is further provided with:
a hinge shaft which, at a distance D from the geometric centre of gravity of the coupling means, is connected to the coupling means;
a bicycle support which can hinge around the hinge shaft between, on the one hand, a load position whereby a free end of the bicycle support faces towards the ground and, on the other hand, a transport position whereby the aforementioned free end of the bicycle support faces away from the ground;
whereby the bicycle carrier is provided with locking means for locking the rotation of the bicycle support in the transport position and whereby the hinge shaft is located on a first side at the distance D from the virtual vertical plane that extends in a parallel way to the hinge shaft and through the geometric centre of gravity of the coupling means, and the free end of the load-bearing structure which in the load position faces towards the ground is located on a second side of the virtual vertical plane through the geometric centre of gravity of the coupling means.

The major advantage of a bicycle carrier according to the invention is that the bicycles do not have to be lifted onto the bicycle support.

Because the free end of the bicycle support can be tilted towards the ground and possibly make contact with the ground, the bicycle can be ridden onto the bicycle support in an easy manner without having to lift the bicycle.

After riding the bicycle onto the bicycle support, the bicycle support can be tilted back such that the bicycle support is located substantially horizontally.

In such a way bicycles can be very quickly and easily loaded onto the bicycle carrier without lifting the bicycles.

Apart from the convenience and the time saved, a user also has ergonomic advantages. Particularly when loading heavy electric bicycles, the improved ergonomics are exceptional.

The aforementioned distance D ensures that the bicycle carrier in both the transport position and in the load position, as much as possible and most preferably completely, remains within the dimensions of a wall of the vehicle.

It is understood that the aforementioned distance D between the geometric centre of gravity of the coupling means and the hinge shaft extends in the longitudinal direction of the bicycle support or is parallel with the wall of the vehicle.

According to the invention the hinge shaft is located on a first side at the distance D from the virtual vertical plane that extends parallel to the hinge shaft and through the geometric centre of gravity of the coupling means, and the free end of the load-bearing structure which in the load position faces towards the ground is located on a second side of the virtual vertical plane through the geometric centre of gravity of the coupling means.

The advantage is a smaller incline and thus more comfort when loading. Indeed, a smaller incline simplifies putting the bicycles onto the load-bearing structure.

Said incline is related to the aforementioned distance D between the coupling means and the hinge shaft between the load-bearing structure and arm.

The greater the aforementioned distance D, the smaller the incline of the bicycle support in the load position can remain and the simpler it is to put or ride the bicycles onto the bicycle support.

Furthermore, the greater the aforementioned distance D, the higher the bicycle carrier can be mounted at the same incline.

This means the position of the attachment of the bicycle carrier to the coupling means is exceptionally flexible.

Another advantage of the position of the hingeable connection according to the invention is that bicycles can be placed higher. Indeed, the greater the aforementioned distance D, the higher the bicycle carrier can be mounted at the same incline.

In a specific embodiment the hinge shaft can be provided on or be part of a frame that is connected to the coupling means. The bicycle support may then comprise one or more rails which are hingeably applied in the frame and can hinge around the hinge shaft between the load position and the transport position.

Said rails are for example U-shaped rails, but alternatively can also be ramps or the like.

In another embodiment the hinge shaft is connected to the coupling means by means of an arm. In that case preferably the bicycle support comprises a load-bearing structure that can hinge around the hinge shaft between the load position and the transport position. In that case too the load-bearing structure can be provided with one or more rails or guides for guiding and supporting the wheels of the bicycle(s).

Apart from substantially horizontal, the plane formed by the bicycle support can also be at a slight incline in the transport position. Preferably, said incline is less than 15°, more preferably less than 10° and ideally less than 5° relative to the horizontal.

In this way the bicycles can be transported in a safe and orderly way, whereby the wheels of the bicycle are sufficiently supported.

In a preferred embodiment the incline of the plane formed by the bicycle support in the load position is less than 60°, more preferably less than 50° and ideally less than 40° relative to the horizontal.

Naturally, said angle varies with the height at which the bicycle carrier is mounted. The smaller the incline between the plane formed by the bicycle support and the horizontal or ground, the simpler it is to ride the bicycles onto the bicycle support.

Said incline is related to the aforementioned distance D between the coupling means and the hinge shaft.

The greater the aforementioned distance D, the smaller the incline of the bicycle support in the load position can remain and the simpler it is to put or ride the bicycles onto the bicycle support.

Furthermore, the greater the aforementioned distance D, the higher the bicycle carrier can be mounted at the same incline.

This means the position of the attachment of the bicycle carrier to the coupling means is exceptionally flexible.

Preferably, the position where the bicycle support is connected to the frame or the arm can be shifted or modified in the direction of the coupling means.

This has the advantage that the distance D between the bicycle support and the coupling means can be varied. This may be handy when, for example, a bicycle or two-wheeler with wide handlebars must be transported.

In a preferred embodiment the position where the frame or the arm is connected to the coupling means is slideable or variable in the longitudinal direction of the frame or the arm.

This has the advantage that the width of the bicycle carrier can be made smaller when mounted on a narrow vehicle. By changing the position of the frame or the arm it is also possible to ensure in this way that the frame or the arm and the bicycle support do not block a luggage compartment or window or the like.

In other words the dimensions of the bicycle carrier can be flexibly set in accordance with the user's optimum convenience.

Preferably, the frame or the arm is provided with a stop such that the rotation of the bicycle support in the load position and/or transport position is limited.

The rotation of the bicycle support in the transport position is particularly important. Preferably, the bicycle support reaches the stop when the plane formed by the bicycle support extends substantially horizontally.

In a preferred embodiment, the load-bearing structure is provided with one or more guides that extend parallel to each other for guiding and supporting the wheels of the bicycles.

Although the number of guides is unlimited in theory, in practice the number of guides will usually vary between one and four guides. The most common variant is equipped with two guides.

In any case, each guide is intended for guiding one bicycle or two-wheeler. A bicycle carrier with three guides will thus be able to transport maximum three bicycles at the same time.

According to a preferred aspect of the invention, the frame or the aforementioned arm are hingeably connected to the coupling means between, on the one hand, the transport position, and on the other hand, a compact position whereby the bicycle support is tilted in the direction of the coupling means or in the direction of the vehicle.

In that case, preferably the plane formed by the bicycle support will extend substantially in the vertical plane in the compact position. However, it is not excluded that the angle between the plane formed by the bicycle support and the vertical is less than 30°, preferably less than 15° and ideally less than 5°.

Preferably, the bicycle support or the aforementioned guides or rails are provided with one or more hooks for hooking in a wheel of the bicycle in the load position.

Preferably, there are as many hooks as there are guides or rails, or in other words, as many hooks as there are bicycles that can be transported.

Hooking the bicycle wheels in or behind the hooks in the load position ensures that the bicycles cannot roll or fall down again when the bicycle support is tilted towards the ground.

Furthermore, preferably the bicycle support is provided with one or more supports that extend at right angles or at an angle relative to the plane formed by the bicycle support. Said supports will support the bicycle in the transport position such that said bicycle cannot topple over.

Preferably, there are as many supports as there are guides or rails, or in other words, as many supports as there are bicycles that can be transported.

The supports are designed and dimensioned such that said supports can clamp or secure the tubes of a bicycle frame.

In a preferred embodiment the aforementioned supports are collapsible in the direction of the bicycle support such that said supports come to lie in the plane formed by the bicycle support in the load position and/or the compact position.

Preferably, the bicycle support is connected to the frame or the arm by means of a gas spring. Said gas spring will help the user when hinging the bicycle support between the load position and the transport position.

In this way the user, even in fully loaded condition, will be able to change the bicycle support with very little effort from the load position to the transport position.

According to a preferred aspect of the invention the aforementioned locking means are such that said means are able to lock the rotation of the bicycle support relative to the arm or the frame.

Preferably, the aforementioned coupling means of the bicycle carrier are provided with a tube frame that can be mounted against the wall of the vehicle.

Alternatively, said coupling means can also be provided with a trailer hitch for coupling with a towbar of a vehicle.

More alternatively, said coupling means can also be provided for attachment against an existing tube frame that is already located against the wall of the vehicle.

In a preferred embodiment, the bicycle carrier is substantially made from, for example, aluminium, stainless steel or another material suitable to this end for obtaining a light bicycle carrier, which also, once detached from the vehicle, is easy to manipulate and transport.

With the intention of better showing the characteristics of the invention, a preferred embodiment of a bicycle carrier according to the invention is described hereinafter, by way of an example without any limiting nature, with reference to the accompanying drawings wherein:
figure 1 schematically shows a perspective view of a bicycle carrier according to the invention in the transport position;
figure 2 shows a front view of the bicycle carrier according to figure 1;
figure 3 schematically shows a perspective view of a bicycle carrier according to the invention in the load position;
figure 4 shows a front view of the bicycle carrier according to figure 3;
figure 5 shows a top view of the bicycle carrier according to figure 3;
figure 6 schematically shows a perspective view of a bicycle carrier according to the invention in the compact position;
figure 7 shows a side view of the bicycle carrier according to figure 6;
figure 8 schematically shows a perspective view of an alternative embodiment of a bicycle carrier with an arm in two parts, whereby the first part of the arm and the second part of the arm are coupled to each other in the transport position according to the invention;
figure 9 shows the bicycle carrier of figure 8 whereby the first part of the arm and the second part of the arm are uncoupled;
figure 10 shows the bicycle carrier of figure 9 but this time in the load position;
figure 11 shows a front view of the bicycle carrier according to figure 10.

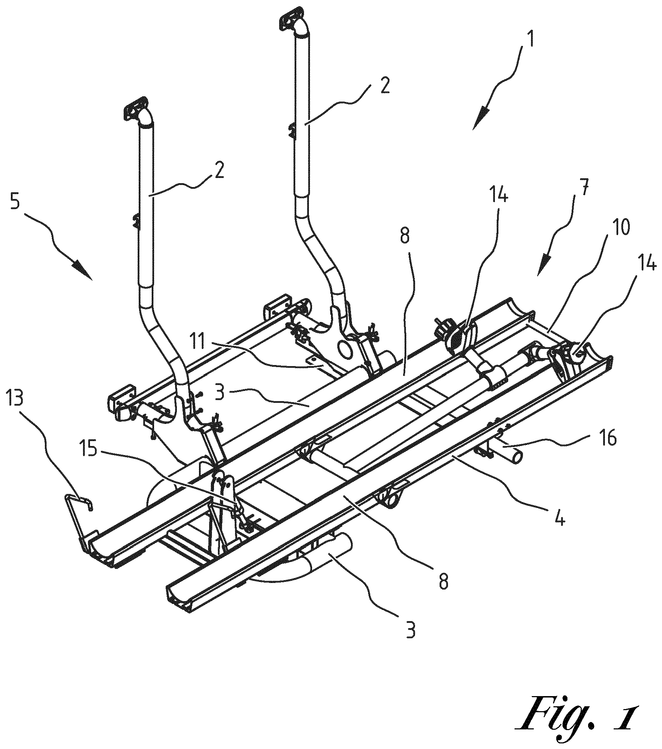

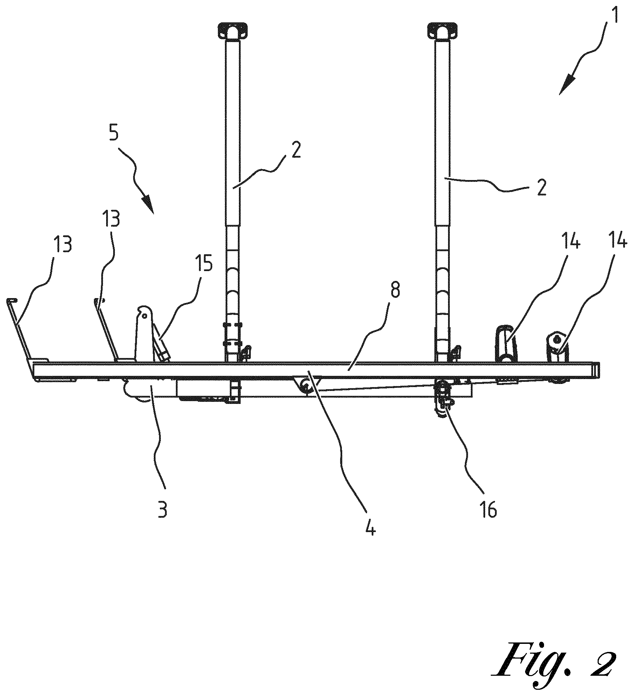

The bicycle carrier 1 shown in figure 1 and 2 is intended for mounting at the front or back against the wall of a vehicle and in this case is substantially made from aluminium.

Alternatively, the bicycle carrier 1 can also be manufactured from a different material suitable to this end.

The bicycle carrier 1 comprises coupling means 2 and a hinge shaft 3 which, at a distance D from the geometric centre of gravity of the coupling means 2, is connected to the coupling means 2 by means of an arm 3A. However, it is possible that the hinge shaft 3 is provided on or is part of a frame that is connected to the coupling means 2.

The bicycle carrier 1 further comprises a bicycle support 4 that can hinge around the hinge shaft 3. In this embodiment, the bicycle support 4 is provided with a load-bearing structure 4A.

In this case, the bicycle carrier 1 is provided with coupling means 2 in the form of a tube frame 2 that can be mounted against the front or rear wall of the vehicle.

The hinge shaft 3 is located on a first side at the distance D from the virtual vertical plan that extends parallel to the hinge shaft 3 and through the geometric centre of gravity of the coupling means 2.

The free end of the load-bearing structure 4A facing the ground in the load position is located through the geometric centre of gravity of the coupling means 2 on a second side of the virtual vertical plane.

Figure 2 shows more clearly that in this case the first side is located to the left of the geometric centre of gravity of the coupling means 2 while the second side is located to the right of the geometric centre of gravity of the coupling means 2.

However, it is also possible that the bicycle carrier 1 can be attached against an existing tube frame 2 that is already present on the wall of the vehicle.

More alternatively, the coupling means 2 can be provided with a trailer hitch that can be attached to a towbar of the vehicle.

As in this example the tube frame 2 consists of two separate tubes 2 or rods, the aforementioned distance D is defined as being the distance between, on the one hand, the geometric centre of gravity of the tube frame 2 and, on the other hand, the hinge shaft 3 between the arm 3A and the load-bearing structure 4A.

In the event that the coupling means 2 are provided with a trailer hitch it is clear that the distance D is defined as being the distance between, on the one hand, the centre of the trailer hitch and, on the other hand, the hinge shaft 3.

Preferably, said distance D is greater than fifteen centimetres, more preferably greater than thirty centimetre.

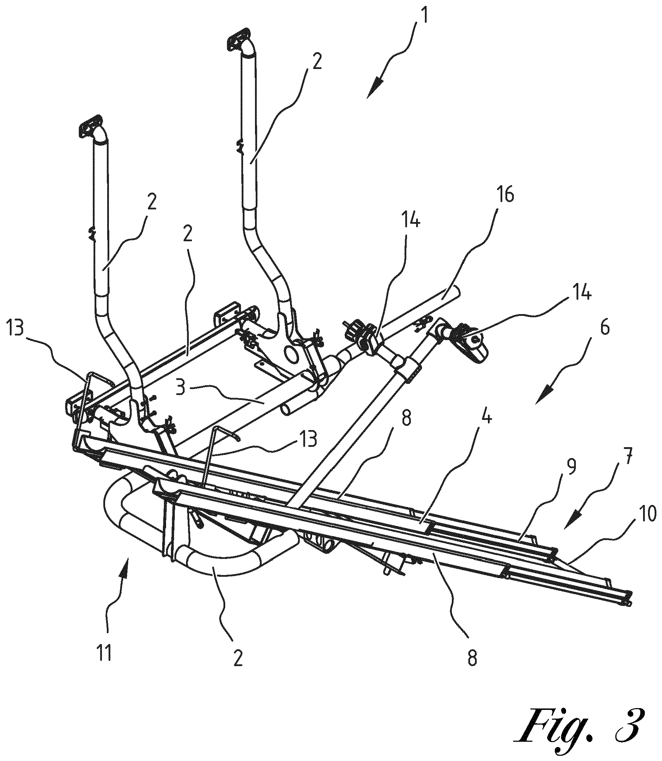

Said load-bearing structure 4A can hinge between, on the one hand, the transport position 5 as shown here and, on the other hand, the load position 6, as shown in figures 3, 4 and 5.

In the transport position 5, a free end 7 of the load-bearing structure 4A faces away from the ground.

The aforementioned distance D also ensures that the bicycle carrier 1 in both the transport position 5 and in the load position 6 remains as much as possible and most preferably fully within the dimensions of the wall of the vehicle.

The plane formed by the bicycle support 4 or load-bearing structure 4A extends substantially horizontally in said transport position 5.

However, it is not excluded that the plane formed by the bicycle support 4 or load-bearing structure 4A inclines slightly in the transport position 5, for example less than 15° relative to the horizontal, or more preferably less than 10° or ideally less than 5° relative to the horizontal.

In the load position 6, said free end 7, in fact, faces towards the ground.

The incline of the plane formed by the bicycle support 4 or load-bearing structure 4A amounts to approximately 45° in this example.

However, in practice said incline can vary between 60° and 20°, but preferably is less than 50° and most preferably less than 40° relative to the horizontal.

A smaller incline simplifies putting the bicycles onto the load-bearing structure 4A.

Said incline is related to the aforementioned distance D between the coupling means 2 and the hinge shaft 3 between the load-bearing structure 4A and arm 3A.

The greater the aforementioned distance D, the smaller the incline of the load-bearing structure 4A in the load position 6 can remain and the simpler it is to put or ride the bicycles onto the load-bearing structure 4A.

Furthermore, the greater the aforementioned distance D, the higher the bicycle carrier 1 can be mounted at the same incline.

This means the position of the attachment of the bicycle carrier to the coupling means is exceptionally flexible.

As is clearly visible in figure 1, the load-bearing structure 4A is provided in the longitudinal direction with, in this case, two guides 8 which extend parallel to each other. Said guides 8 support and guide the wheels of the bicycles (not shown in the figures for the sake of clarity).

However, the number of guides 8 is not limited to two. In theory the number of guides 8 is unlimited. In practice the number of guides 8 will vary between one and four usually.

In this embodiment, the guides 8 are executed as U-shaped rails 8.

Alternatively, said guides 8 can also be executed differently, for example as ramps.

Figures 3 to 5 clearly show that in this embodiment each guide 8 is provided with a carriage 9 that is telescopically retractable or extendable in the longitudinal direction of the guides 8. In figures 3 to 5 the carriages are extended.

Said carriages 9 extend the guides 8 in the load position 6 such that the bicycle carrier 1 can be mounted higher than the known bicycle carriers 1 and at the same time the incline between the plane formed by the load-bearing structure 4A and the horizontal can be drastically limited in this way.

In other words, the telescopic carriages 9 simplify loading and unloading the bicycles onto the load-bearing structure 4A.

In the described example the carriages 9 are connected to each other by means of a crossbar 10 such that said carriages 9 move synchronously when retracting or extending.

For a person skilled in the art it is clear that said carriages 9, instead of extendable or telescopic, could also be separate components, that can be detachably attached to the guides 8.

For a person skilled in the art is it also clear that the guides 8 and/or the carriages 9 can be provided with clamping means for securing or clamping the wheels of the bicycle to the relevant guides 8 and/or carriages 9. Said clamping means can for example be executed as a strap with a buckle.

In this embodiment, the position where the arm 3A is connected to the coupling means 2 can be shifted in the longitudinal direction of the arm 3A. In this way, the bicycle carrier 1 can be made wider or narrower.

In this embodiment, the arm 3A is provided with a stop 11 which limits the rotation of the load-bearing structure 4A in the load position 6.

The position where the load-bearing structure 4A is connected to the arm 3A is fixed in this shown example, but it is not excluded that said position can be shifted in the direction of the coupling means 2. This increases the flexibility of the mounting position of the bicycle carrier 1.

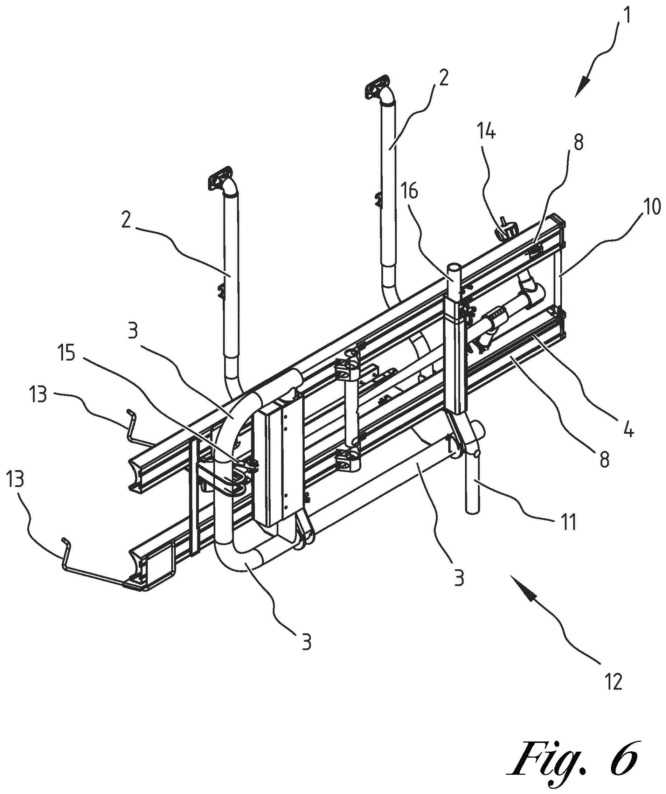

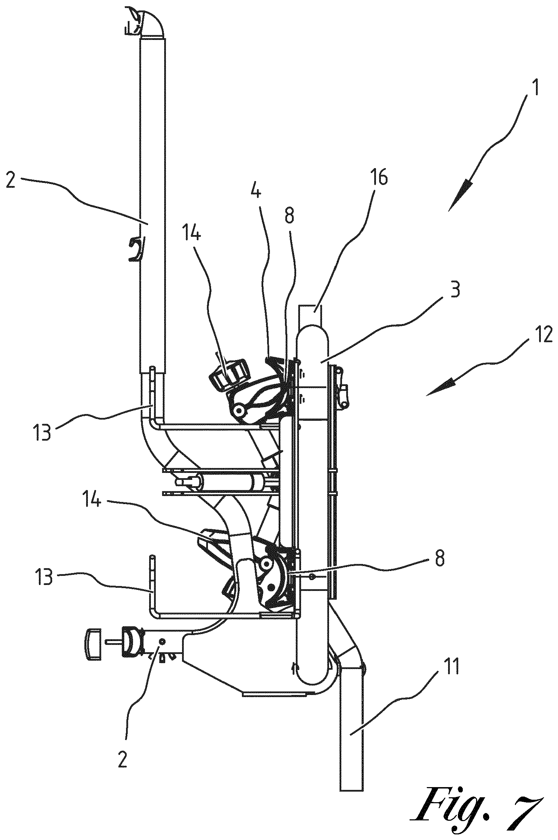

In this example, the arm 3A is hingeably connected to the coupling means 2 such that the arm 3A can hinge between, on the one hand, the transport position 5 and, on the other hand, a compact position 12 whereby the load-bearing structure 4A is tilted in the direction of the coupling means 2. This situation is shown in figures 6 and 7.

Figures 6 and 7 clearly show that in this case the plane formed by the load-bearing structure 4A in the compact position 12 extends substantially in the vertical plane.

In this way a very compact bicycle carrier 1 is obtained in the unloaded condition.

However, it is not excluded that the angle between the plane formed by the load-bearing structure and the vertical is less than 30°, preferably less than 15° and ideally less than 5°.

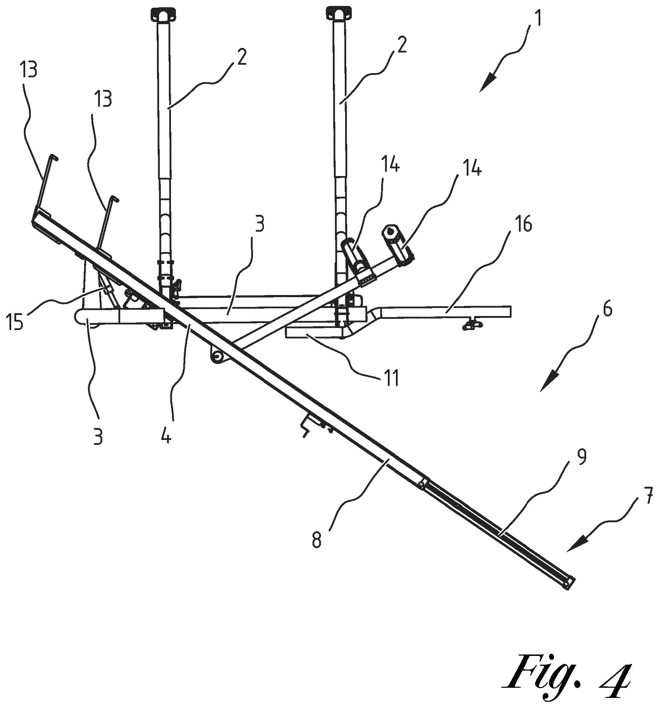

Figure 4 clearly shows that the variant of the invention shown is provided with two hooks 13 for hooking the bicycle into the load position 6. In this case, said hooks 13 are slideably connected to the guides 8. In this example, the position of said hooks 13 can be varied depending on the length of the bicycle.

However, the hooks 13 can also be staggered as shown in figure 4 to ensure that when transporting two bicycles, the pedals and/or the handlebars of the first bicycle are not in the way of the pedals and/or the handlebars of the second bicycle.

However, the number of hooks 13 is not limited to two. In practice the number of hooks 13 will typically be equal to the number of guides 8, or in other words, in practice the number of hooks 13 will be equal to the number of bicycles to be transported.

Figure 3 and 4 also clearly show that the load-bearing structure 4A is provided with two supports 14. In practice, preferably the number of supports 14 is the same as the number of guides 8.

Said supports 14 are intended to be connected to the frame of the bicycle in the transport position 5. Said supports 14 secure or clamp the frames of the bicycles as it were, such that the bicycles cannot fall over during transport.

In this case, said supports 14 extend at an angle relative to the load-bearing structure 4A and are collapsible in the direction of the plane formed by the load-bearing structure 4A.

Particularly in the compact position 12 and also in the load position 6 it is handy that the supports 14 are collapsible in the direction of the load-bearing structure 4A.

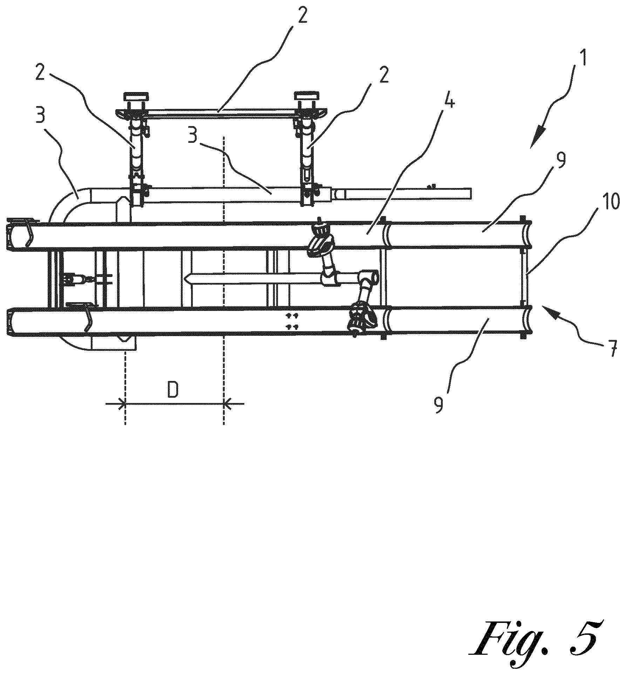

Figures 4 and 5 clearly show that in this example the bicycle carrier 1 is equipped with a gas spring 15 that is applied between the load-bearing structure 4A and the arm 3A. Said gas spring 15 will help the user when hinging the load-bearing structure 4A between the load position 6 and the transport position 5. In this way hinging the load-bearing structure 4A only requires a very small effort.

Alternatively, said gas spring 15 can also be replaced by a classic spring or a different kind of spring or spring damper system.

In this embodiment, the location of the hinge shaft 3 around which the load-bearing structure 4 hinges is chosen such that in the load position 6 one wheel of the bicycle is put at least partially beyond the hinge shaft 3. The section of the weight of the bicycle that inclines beyond the hinge shaft 3 helps to move the load-bearing structure 4A from the load position 6 to the transport position 5.

The combination of this inclining weight in the load position 6 and the gas spring 15 ensures that with a minimum effort the loaded bicycle carrier 1 can be moved from the load position 6 to the transport position 5 and vice versa.

Consequently, the structure and more specifically the arm 3A and the load-bearing structure 4A of the bicycle carrier 1 can remain very light.

Figures 1, 3 and 6 clearly show that the bicycle carrier 1 also comprises locking means 16 that lock the rotation of the load-bearing structure 4A in the transport position 5 as shown in figure 1.

In this example the locking means 16 lock the rotation of the load-bearing structure 4A relative to the arm 3A.

In this embodiment the locking means 16 are executed as a collapsible rod 16 which is connected to the arm 3A. Said rod 16 supports the load-bearing structure 4A in the transport position 5 as shown in figure 1.

That same rod 16 is collapsed in the load position 6 as shown in figure 3 such that said rod 16 comes to lie parallel with the guides 8 of the load-bearing structure 4A and consequently no longer supports the load-bearing structure 4A.

However, it is not unthinkable that the rod 16 collapses upward or downward instead of to the side as shown in figure 3.

Alternatively, the rod 16 could also be removable instead of collapsible in the load position 6.

The rod 16 also has a function in the compact position 12 as shown in figure 6. In said position the rod 16 is collapsed upward and in this way locks the rotation of the arm 3A such that the plane formed by the load-bearing structure 4A extends substantially vertically.

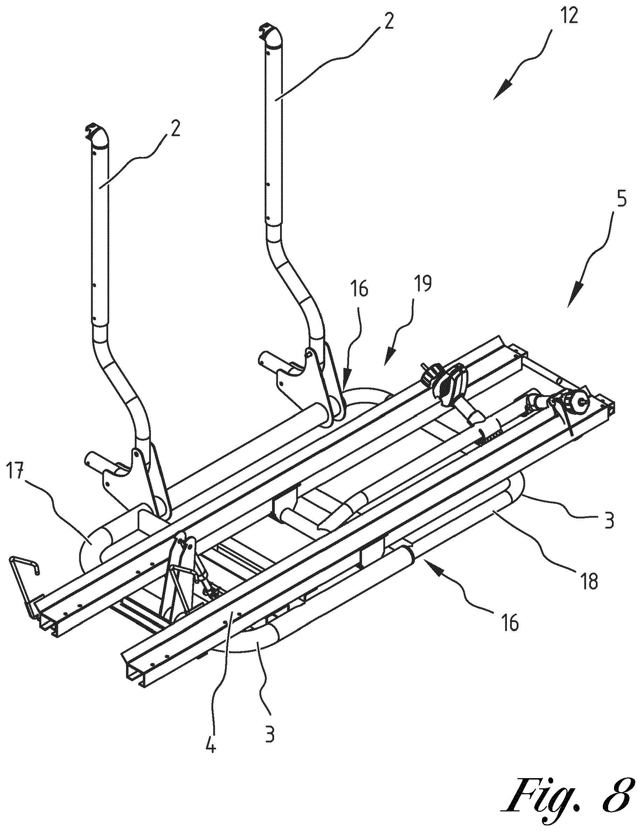

An alternative variant of the bicycle carrier 1 is shown in figures 8 to 12, in which the arm 3A is executed in two parts, i.e. a first part 17 and a second part 18.

In the transport position, as shown in figure 8, the first part 17 of the arm 3A is coupled with the second part 18 of the arm 3A.

In this example, the two parts 17, 18 are executed as two tubes 17, 18 which can slide into each other such that a closed frame 19 is formed.

However, it is not excluded that the first part 17 and the second part 18 are detachably coupled or snapped into each other in a different way.

The first part 17 of the arm 3A is connected to the coupling means 2 and supports the load-bearing structure 4A, while the second part 18 is connected to the extendable or telescopic carriages 9.

The coupling of the first part 17 with the second part 18, as shown in figure 8, ensures the rotation of the load-bearing structure 4A is locked, in this way the first part 17 and second part 18 coupled to each other act as locking means 16.

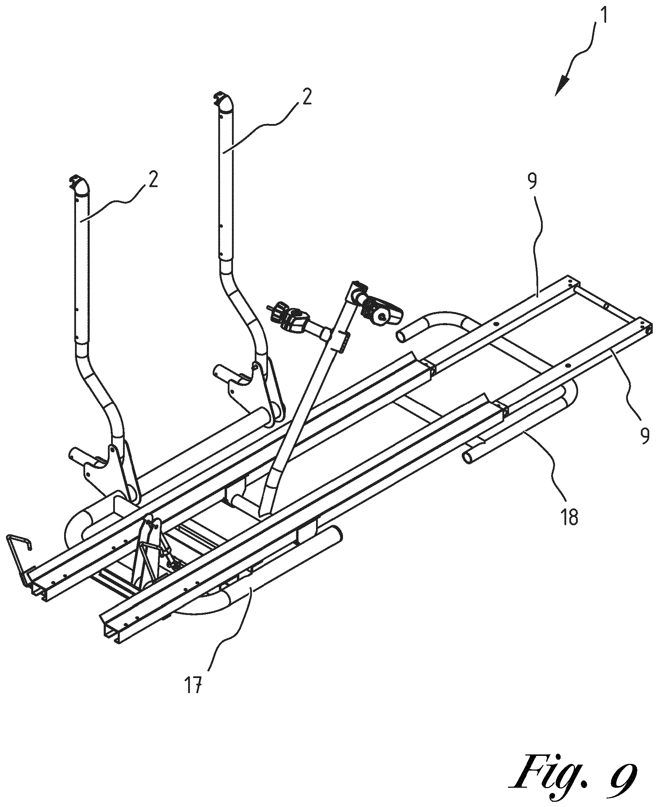

In figure 9 the second part 18 is detached from the first part 17 or in other words the two parts 17, 18 are slid out of each other.

Although in this figure 9 the load-bearing structure 4A is still located horizontally, the rotation of the load-bearing structure 4A is no longer locked here.

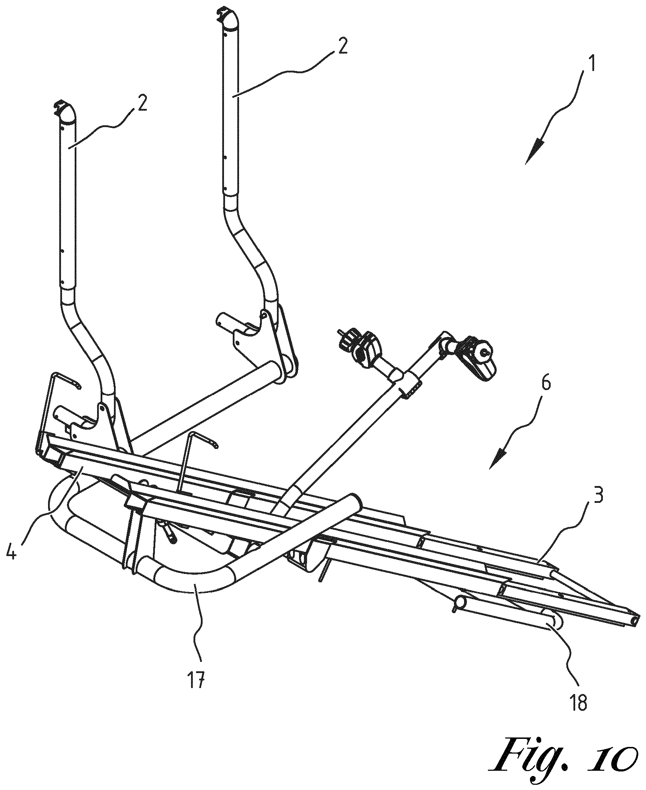

Indeed, as shown in figure 10, the load-bearing structure 4A is now rotated relative to the first part 17 with the carriages 9 facing downward or in the direction of the ground.

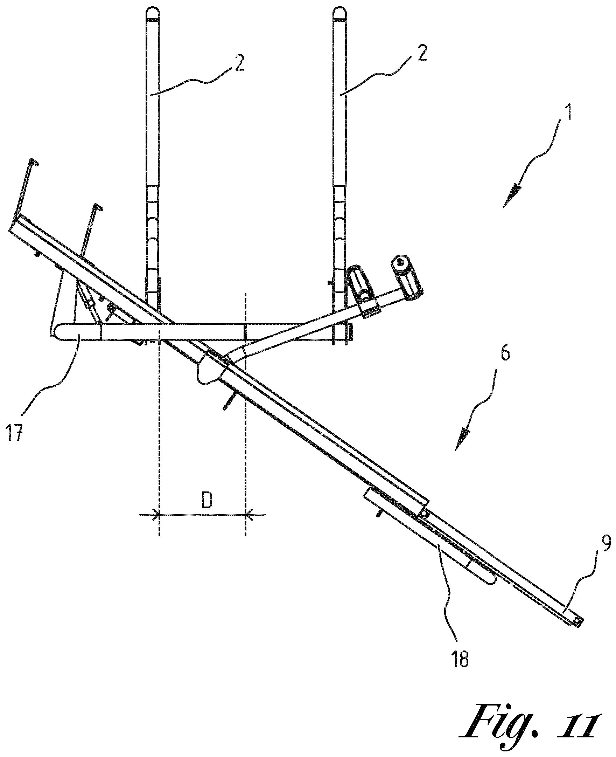

As the second part 18 is coupled with the aforementioned carriages 9, extending the second part 18 from the first part 17 at the same time ensures that the carriages 9 are extended, this is shown better in the front view of the bicycle carrier 1, as shown in figure 11.

The bicycle carrier 1 is now located in the load position.

The use of the bicycle carrier 1 according to the invention is very simple and as follows:
In a first step the bicycle carrier 1 is mounted against the vehicle using the coupling means 2. For the sake of simplicity we are assuming that the bicycle carrier 1 is initially in the transport position 5.

In a second step the bicycle carrier 1 is put in the load position 6 by collapsing the rod 16 that supports the load-bearing structure 4A or in the case of an arm that is executed in two parts, detaching the second part 18 of the arm 3A from the first part 17.

In an optional third step, the carriages 9, if any, are extended.

In a fourth step, the load-bearing structure 4A is tilted in the direction of the ground, and preferably the carriages 9, if any, touch the ground.

In a fifth step the bicycles are ridden onto the load-bearing structure 4A and if relevant the front wheels are hooked into the hooks 13 provided to that end.

In a sixth step the load-bearing structure 4A is returned to the transport position 5 by bringing the plane formed by the load-bearing structure 4A to a substantially horizontal position and subsequently supporting the load-bearing structure 4A with the rod 16 or by recoupling the first part 17 of the arm 3A by sliding it into the second part 18. Bringing the load-bearing structure 4A to a horizontal position takes little effort using the gas spring 15.

In an optional seventh step the supports 14 are connected to the bicycle frames to prevent the bicycles from falling over.

The bicycle carrier 1 is now ready to transport the bicycles.

Unloading the bicycles is done by carrying out the six steps in reverse order.

Subsequently, if relevant the bicycle carrier 1 can be moved from the transport position 5 to the compact position 12 by moving the plane formed by the bicycle support 4 or load-bearing structure 4A substantially vertically and locking again using the rod 16 or using a clamp or connection between the coupling means 2 and the second part 18.

It is understood that the coupling means 2, the arm 3A and the load-bearing structure 4A can be executed in many different ways. The locking means 16 as shown and described in the figures are also only examples of possibilities.

Although the load-bearing structure 4A in the figures shown rotates clockwise, the invention also relates to a bicycle carrier 1 whereby the load-bearing structure 4A rotates counter-clockwise.

Alternatively, the locking means 16 can also be provided on the wall of the vehicle, for example a collapsible rod which is applied at a distance from the aforementioned hinge point against or on the wall.

More alternatively, the locking means 16, in the case of, for example, the coupling means 2 in the form of a tube frame 2, can be provided with a rod that can be attached to the towbar of the vehicle and supports the load-bearing structure 4A in the transport position 5.

The invention also relates to a bicycle carrier 1 whereby a hinge shaft 3 of the bicycle support 4 is located on the level of, or near, the coupling means 2 and is directly or indirectly connected thereto. Indeed, for the person skilled in the art it is clear that the aforementioned distance D can equal zero if the coupling means 2, for example in case of the tube frame 2, are not provided centrally on or against the wall of the vehicle. In such case the arm 3A may possibly be left out and the bicycle support 4 can be directly or indirectly hingedly connected to the coupling means 2.

In other words, the incline of the plane formed by the bicycle support 4 in the load position 6 can be kept small by, on the one hand, providing a distance D between the coupling means 2 and the hinge point of the bicycle support 4 in the case of centrally positioned coupling means 2 or, on the other hand, providing a distance between the position of the coupling means 2 on the wall and the central vertical axis through the relevant wall of the vehicle. It goes without saying that a combination of both distances is also possible.

In an alternative embodiment, the hinge shaft 3 is provided on or is part of a frame that is connected to the coupling means 2. The bicycle support 4 then comprises one or more rails 8 that are applied in the frame and can hinge around the hinge shaft 3 between the load position 6 and the transport position 5.

If relevant, said rails 8 can then be aligned with the rails 8 of the variants as shown in figures 1 to 11, while the frame, if relevant, can be aligned with the load-bearing structure 4A with the difference that the frame does not hinge relative to the hinge shaft 3 but only the rails 8 hinge relative to the hinge shaft 3.

## Claims

1. Bicycle carrier, comprising coupling means (2) for mounting to a vehicle, wherein the bicycle carrier (1) is further provided with:
a hinge shaft (3) which, at a distance D from the geometric centre of gravity of the coupling means (2), is connected to the coupling means (2);
a bicycle support (4) which can hinge around the hinge shaft (3)between, on the one hand, a load position (6) whereby a free end (7) of the bicycle support (4) faces towards the ground and, on the other hand, a transport position (5) whereby the aforementioned free end (7) of the bicycle support (4) faces away from the ground;
**characterised in that** the bicycle carrier (1) is provided with locking means (16) for locking the rotation of the bicycle support (4) in the transport position (5) and whereby the hingeable connection of the load-bearing structure (4A) with the arm (3) is located on a first side at the distance D from the virtual vertical plane that extends parallel to the hinge shaft (3) and through the geometric centre of gravity of the coupling means (2), and the free end (7) of the load-bearing structure (4A) which in the load position (6) faces towards the ground is located on a second side of the virtual vertical plane through the geometric centre of gravity of the coupling means (2).

2. Bicycle carrier according to claim 1, **characterised in that** the hinge shaft (3) is provided on or is part of a frame that is connected to the coupling means (2), whereby the bicycle support (4) comprises one or more rails (8) that are hingeably applied in the frame and can hinge around the hinge shaft (3) between the load position (6) and the transport position (5).

3. Bicycle carrier according to claim 1, **characterised in that** the hinge shaft (3) is connected to the coupling means (2) by means of an arm (3A) and whereby the bicycle support (4) comprises a load-bearing structure (4A) that can hinge around the hinge shaft (3) between the load position (6) and transport position (5).

4. Bicycle carrier according to any one of the previous claims, **characterised in that** preferably the aforementioned distance D is greater than fifteen centimetres, ideally greater than thirty centimetres.

5. Bicycle carrier according to any one of the previous claims, **characterised in that** the incline of the plane formed by the bicycle support (4) in the load position (6) is less than 60°, preferably less than 50°, preferably less than 40° relative to the horizontal.

6. Bicycle carrier according to any one of the previous claims, **characterised in that** the position where the frame or the arm (3A) is connected to the coupling means (2) can be shifted in the longitudinal direction of the frame or the arm (3A).

7. Bicycle carrier according to any one of the previous claims, **characterised in that** the frame or the arm (3A) is provided with a stop (11) such that the rotation of the load-bearing structure (4A) in the load position (6) and/or the transport position (5) is limited.

8. Bicycle carrier according to any one of the previous claims 2, **characterised in that** the rails (8) are provided with one or more carriages (9) which are telescopically retractable or extendable in the longitudinal direction of the rails (8).

9. Bicycle carrier according to any one of the previous claims 2 to 8, **characterised in that** the locking means (16) lock the rotation of the bicycle support (4) relative to the frame or the arm (3A) in the transport position (5).

10. Bicycle carrier according to any one of the previous claims 2 to 9, **characterised in that** the frame or the arm (3A) is hingeably connected to the coupling means (2) between, on the one hand, the transport position (5) and, on the other hand, a compact position (12) whereby the bicycle support (4) is tilted in the direction of the coupling means (2).

11. Bicycle carrier according to any one of the previous claims, **characterised in that** the locking means (16) lock the rotation of the frame or the arm (3A) relative to the coupling means 2 in the compact position (12).

12. Bicycle carrier according to any one of the previous claims, **characterised in that** a spring or a gas spring (15) is provided between the bicycle support (4) and the frame or the arm (3A) which helps a user when hinging the bicycle support (4) between the load position (6) and the transport position (5).

13. Bicycle carrier according to any one of the previous claims, **characterised in that** the coupling means (2) of the bicycle carrier (1) are provided with a trailer hitch for coupling with a towbar of a vehicle or that the coupling means (2) are provided with a tube frame (2) provided to that end or means for attaching against a tube frame on a front or rear wall of the vehicle.

## Patentansprüche

1. Fahrradtransportvorrichtung, die Befestigungsmittel (2) zum Einbau an einem Fahrzeug umfasst, wobei die Fahrradtransportvorrichtung (1) ferner versehen ist mit:
einer Gelenkachse (3), die in einem Abstand D von dem geometrischen Schwerpunkt der Befestigungsvorrichtungen (2) mit diesen verbunden ist;
einem Fahrradträger (4), der um die Gelenkachse (3) zwischen einerseits einer Ladeposition (6), in der ein freies Ende (7) des Fahrradträgers (4) in Richtung Boden ausgerichtet ist, und andererseits einer Transportposition (5), in der das oben erwähnte freie Ende (7) des Fahrradträgers (4) von dem Boden weggerichtet ist;
**dadurch gekennzeichnet, dass** die Fahrradtransportvorrichtung (1) mit Verriegelungsmitteln (16) versehen ist, die dazu bestimmt sind, die Drehung des Fahrradträgers (4) in der Transportposition (5) zu verriegeln; und wobei die Gelenkverbindung der Tragkonstruktion (4A) mit dem Arm (3) auf einer ersten Seite in einem Abstand D von der virtuellen vertikalen Ebene liegt, die sich parallel zur Gelenkachse (3) und sich durch das Zentrum der Befestigungsmittel (2) erstreckt, und das freie Ende (7) der Tragkonstruktion (4A), das in der Ladeposition (6) in Richtung Boden ausgerichtet ist, auf einer zweiten Seite der virtuellen vertikalen Ebene liegt, die sich durch das geometrische Zentrum der Befestigungsmittel (2) erstreckt.

2. Fahrradtransportvorrichtung nach Anspruch 1, **dadurch gekennzeichnet, dass** die Gelenkachse (3) an einem Rahmen vorgesehen ist, der mit den Befestigungsmitteln (2) verbunden ist oder Teil derselben ist; wobei der Fahrradträger (4) eine oder mehrere Schienen (8) umfasst, die gelenkig in dem Rahmen gelagert sind und die um die Gelenkachse (3) zwischen der Ladeposition (6) und der Transportposition (5) schwenkbar sind.

3. Fahrradtransportvorrichtung nach Anspruch 1, **dadurch gekennzeichnet, dass** die Gelenkachse (3) mittels eines Arms (3A) mit den Befestigungsmitteln (2) verbunden ist; und wobei der Fahrradträger (4) eine Tragkonstruktion (4A) umfasst, die um die Gelenkachse (3) zwischen der Ladeposition (6) und der Transportposition (5) schwenkbar ist.

4. Fahrradtransportvorrichtung nach einem der vorstehenden Ansprüche, **dadurch gekennzeichnet, dass** der oben erwähnte Abstand D vorzugsweise größer als fünfzehn Zentimeter, idealerweise größer als dreißig Zentimeter ist.

5. Fahrradtransportvorrichtung nach einem der vorstehenden Ansprüche, **dadurch gekennzeichnet, dass** die Neigung der von dem Fahrradträger (4) in der Ladeposition (6) gebildeten Ebene unter Bildung eines Winkels von weniger als 60°, vorzugsweise weniger als 50°, vorzugsweise weniger als 40° zur Horizontalen liegt.

6. Fahrradtransportvorrichtung nach einem der vorstehenden Ansprüche, **dadurch gekennzeichnet, dass** die Position, in der der Rahmen oder der Arm (3A) mit den Befestigungsmitteln (2) verbunden ist, in horizontaler Richtung des Rahmens oder des Arms (3A) verschoben werden kann.

7. Fahrradtransportvorrichtung nach einem der vorstehenden Ansprüche, **dadurch gekennzeichnet, dass** der Rahmen oder der Arm (3A) derart mit einem Anschlag (11) versehen ist, dass die Drehung der Tragkonstruktion (4A) in der Ladeposition (6) und/oder in der Transportposition (5) begrenzt ist.

8. Fahrradtransportvorrichtung nach einem der vorstehenden Ansprüche 2, **dadurch gekennzeichnet, dass** die Schienen (8) mit einem oder mehreren Laufwagen (9) versehen sind, die in Längsrichtung der Schienen (8) teleskopartig ein- oder ausfahrbar sind.

9. Fahrradtransportvorrichtung nach einem der vorstehenden Ansprüche 2 bis 8, **dadurch gekennzeichnet, dass** die Verriegelungsmittel (16) die Drehung des Fahrradträgers (4) relativ zu dem Rahmen oder zu dem Arm (3A) in der Transportposition (5) verriegeln.

10. Fahrradtransportvorrichtung nach einem der vorstehenden Ansprüche 2 bis 9, **dadurch gekennzeichnet, dass** der Rahmen oder der Arm (3A) gelenkig mit den Befestigungsmitteln (2) verbunden ist, und zwar zwischen einerseits die Transportposition (5) und andererseits eine kompakte Position (12), in der der Fahrradträger (4) in Richtung der Befestigungsmittel (2) geneigt ist.

11. Fahrradtransportvorrichtung nach einem der vorstehenden Ansprüche, **dadurch gekennzeichnet, dass** die Verriegelungsmittel (16) die Drehung des Rahmens oder des Arms (3A) relativ zu den Befestigungsmitteln (2) in der kompakten Position (12) verriegeln.

12. Fahrradtransportvorrichtung nach einem der vorstehenden Ansprüche, **dadurch gekennzeichnet, dass** zwischen dem Fahrradträger (4) und dem Rahmen oder dem Arm (3A) eine Feder oder eine Luftfeder (15) vorgesehen ist, die einem Benutzer beim Schwenken des Fahrradträgers (4) zwischen der Ladeposition (6) und die Transportposition (5) unterstützt.

13. Fahrradtransportvorrichtung nach einem der vorstehenden Ansprüche, **dadurch gekennzeichnet, dass** die Befestigungsmittel (2) der Fahrradtransportvorrichtung (1) mit einer Anhängerkupplung zum Kuppeln an eine Anhängerkupplung eines Fahrzeugs versehen sind oder dass die Befestigungsmittel (2) mit einem hierfür vorgesehenen Rohrrahmen oder mit Mitteln zur Befestigung an einem Rohrrahmen an einer Vorder- oder Rückwand eines Fahrzeugs versehen sind.

## Revendications

1. Dispositif de transport de bicyclette, qui comprend des moyens de fixation (2) destinés au montage sur un véhicule, dans lequel le dispositif de transport de bicyclette (1) est en outre équipé :
d'un axe d'articulation (3) qui, à une distance D du centre géométrique de gravité des moyens de fixation (2), est relié aux moyens de fixation (2) ;
d'un support de bicyclette (4) qui est apte à s'articuler autour de l'axe d'articulation (3) entre, d'une part, une position de chargement (6) dans laquelle une extrémité libre (7) du support de bicyclette (4) est orientée dans la direction du sol, et, d'autre part, une position de transport (5) dans laquelle l'extrémité libre (7) du support de bicyclette (4), qui a été mentionnée ci-dessus, se détourne du sol ;
**caractérisé en ce que** le dispositif de transport de bicyclette (1) est équipé de moyens de verrouillage (16) destinés à verrouiller la rotation du support de bicyclette (4) dans la position de transport (5) ; et dans lequel la liaison articulée de la structure porteuse (4A) avec le bras (3) est située sur un premier côté à la distance D du plan vertical virtuel qui s'étend en parallèle par rapport à l'axe d'articulation (3) et passe par le centre géométrique de gravité des moyens de fixation (2), et l'extrémité libre (7) de la structure porteuse (4A) qui, dans la position de chargement (6) est orientée dans la direction du sol, est située sur un deuxième côté du plan vertical virtuel qui passe par le centre géométrique de gravité des moyens de fixation (2).

2. Dispositif de transport de bicyclette selon la revendication 1, **caractérisé en ce que** l'axe d'articulation (3) est prévu sur un cadre qui est relié aux moyens de fixation (2) ou fait partie de ces derniers ; dans lequel le support de bicyclette (4) comprend un ou plusieurs rails (8) qui sont appliqués de manière articulée dans le cadre et sont aptes à s'articuler autour de l'axe d'articulation (3) entre la position de chargement (6) et la position de transport (5).

3. Dispositif de transport de bicyclette selon la revendication 1, **caractérisé en ce que** l'axe d'articulation (3) est relié aux moyens de fixation (2) à l'aide d'un bras (3A) ; et dans lequel le support de bicyclette (4) comprend une structure porteuse (4A) qui est apte à s'articuler autour de l'axe d'articulation (3) entre la position de chargement (6) et la position de transport (5).

4. Dispositif de transport de bicyclette selon l'une quelconque des revendications précédentes, **caractérisé en ce que**, de préférence, la distance D qui a été mentionnée ci-dessus est supérieure à quinze centimètres, idéalement supérieure à trente centimètres.

5. Dispositif de transport de bicyclette selon l'une quelconque des revendications précédentes, **caractérisé en ce que** l'inclinaison du plan formée par le support de bicyclette (4) dans la position de chargement (6) forme un angle inférieur à 60°, de préférence inférieur à 50°, de préférence inférieur à 40° par rapport à l'horizontale.

6. Dispositif de transport de bicyclette selon l'une quelconque des revendications précédentes, **caractérisé en ce que** la position dans laquelle le cadre ou le bras (3A) est relié aux moyens de fixation (2) peut être décalée dans la direction horizontale du cadre ou du bras (3A).

7. Dispositif de transport de bicyclette selon l'une quelconque des revendications précédentes, **caractérisé en ce que** le cadre ou le bras (3A) est équipé d'un arrêt (11), d'une manière telle que la rotation de la structure porteuse (4A) dans la position de chargement (6) et/ou dans la position de transport (5) est limitée.

8. Dispositif de transport de bicyclette selon l'une quelconque des revendications précédentes 2, **caractérisé en ce que** les rails (8) sont équipés d'un ou de plusieurs chariots (9) qui sont rétractables ou extensibles de manière télescopique dans la direction longitudinale des rails (8).

9. Dispositif de transport de bicyclette selon l'une quelconque des revendications précédentes 2 à 8, **caractérisé en ce que** les moyens de verrouillage (16) verrouillent la rotation du support de bicyclette (4) par rapport au cadre ou au bras (3A) dans la position de transport (5).

10. Dispositif de transport de bicyclette selon l'une quelconque des revendications précédentes 2 à 9, **caractérisé en ce que** le cadre ou le bras (3A) est relié de manière articulée aux moyens de fixation (2) entre, d'une part, la position de transport (5) et, d'autre part, une position compacte (12) dans laquelle le support de bicyclette (4) est incliné dans la direction des moyens de fixation (2).

11. Dispositif de transport de bicyclette selon l'une quelconque des revendications précédentes, **caractérisé en ce que** les moyens de verrouillage (16) verrouillent la rotation du cadre ou du bras (3A) par rapport aux moyens de fixation (2) dans la position compacte (12).

12. Dispositif de transport de bicyclette selon l'une quelconque des revendications précédentes, **caractérisé en ce que** l'on prévoit un ressort ou un ressort pneumatique (15) entre le support de bicyclette (4) et le cadre ou le bras (3A), qui aide un utilisateur au cours de l'articulation du support de bicyclette (4) entre la position de chargement (6) et la position de transport (5).

13. Dispositif de transport de bicyclette selon l'une quelconque des revendications précédentes, **caractérisé en ce que** les moyens de fixation (2) du dispositif de transport de bicyclette (1) sont équipés d'un dispositif d'attelage de remorque destiné à être accouplé à une barre de remorquage d'un véhicule ou **en ce que** les moyens de fixation (2) sont équipés d'un cadre tubulaire prévu à cet effet ou de moyens destinés à la fixation contre un cadre tubulaire sur une paroi avant ou arrière d'un véhicule.
